(19) **Europäisches Patentamt**

**European Patent Office**

**Office européen des brevets**

(11) **EP 0 926 888 B1**

(12) **EUROPEAN PATENT SPECIFICATION**

(45) Date of publication and mention
of the grant of the patent:
**11.05.2005 Bulletin 2005/19**

(51) Int Cl.$^7$: **H04N 5/232**, H04N 5/262

(21) Application number: **98310558.6**

(22) Date of filing: **22.12.1998**

(54) **Imaging apparatus**

Bildaufnahmevorrichtung

Dispositif de prise de vues

(84) Designated Contracting States:
**DE FR GB**

(30) Priority: **25.12.1997 JP 35738297**

(43) Date of publication of application:
**30.06.1999 Bulletin 1999/26**

(73) Proprietor: **MATSUSHITA ELECTRIC INDUSTRIAL CO., LTD.**
**Kadoma-shi, Osaka 571-8501 (JP)**

(72) Inventors:
• **Sakaguchi, Takashi**
**Yamatotakada-shi, Nara 635-0013 (JP)**
• **Kusaka, Hiroya**
**Kawanishi-shi, Hyogo 666-0034 (JP)**
• **Nakayama, Masaaki**
**Hirakata-shi, Osaka 573-0074 (JP)**

(74) Representative: **Crawford, Andrew Birkby et al**
**A.A. Thornton & Co.,**
**235 High Holborn**
**London WC1V 7LE (GB)**

(56) References cited:
**EP-A- 0 435 319          EP-A- 0 449 210**
**EP-A- 0 641 123          US-A- 5 402 171**

• **DATABASE WPI Derwent Publications Ltd., London, GB;**

**Description**

FIELD OF THE INVENTION

The present invention relates to an art for generating an image of high quality in an imaging apparatus such as video camera, and more particularly to an art for enhancing the picture quality in a moving picture taking mode not requiring correction for camera shake (image drift).

BACKGROUND OF THE INVENTION

As a conventional video camera capable of taking both moving picture and still picture of high picture quality, the one disclosed in Japanese Laid-open Patent No. 8-154212 is described below.

It comprises a solid-state imaging element adding a camera shake correction region to an imaging region of one frame, a field memory of a memory capacity for two fields, and a camera shake correction function.

In this constitution, after transfer to still picture mode, the camera shake correction function in the moving picture taking mode is stopped, horizontal scanning lines including the camera shake correction region are read out from the solid-state imaging element in the period of two fields, and image lines are interpolated by the line interpolating method by using the obtained line data to generate image data for one frame, so that still picture data of high quality is generated from the stilled picture by the field data after conventional camera shake correction.

In such constitution, however, in the moving picture, since only part of signals in the total imaging region of the solid-state imaging element is used owing to camera shake correction, the picture quality cannot be sufficiently enhanced. Even in the case of taking a moving picture not requiring camera shake, for example, when using a tripod, conventionally, only part of signals in the total imaging region of the solid-stage imaging element is used, and it is impossible to obtain a moving picture of high quality by utilizing the camera shake correction region.

EP 0 641 123 discloses an image movement compensation apparatus using a field memory having more pixels than the number of final output image which is determined according to the broadcast system or the system operation clock. The image movement compensation apparatus further has an image pick-up device having more pixels than the field memory, an image movement detector, and an image movement predictor. The image obtained by the image pick-up device is cropped according to the image movement predicted by the image movement predictor. The residual movement component left in the image read from the image pick-up device is then detected by the image movement detector, and is next removed by image movement compensation using the field memory.

SUMMARY OF THE INVENTION

It is hence an object of the invention to present an imaging apparatus capable of realizing still picture of high image quality and moving picture of high image quality, realising moving picture by camera shake (image drift) correction and moving picture of high image quality in moving picture taking mode without requiring camera shake operation, and realizing moving picture of high image quality by camera shake correction.

To achieve the object, the invention presents an imaging apparatus comprising an imaging element having the number of scanning lines more than the number of scanning lines on the basis of a scanning system such as a television broadcasting system, imaging element driving means for driving the imaging element, video signal generating means for generating a first video signal from the output signal of the imaging element, still picture generating means for generating a still picture from the first video signal, and scanning converting means for generating a second video signal having the number of scanning lines conforming to the scanning system such as the intended television broadcasting system from the first video signal, or an imaging apparatus comprising an imaging element having the number of scanning lines more than the number of scanning lines on the basis of a scanning system such as a television broadcasting system, imaging element driving means for driving the imaging element, video signal generating means for generating a first video signal from the output signal of the imaging element, and scanning converting means for generating a second video signal having the number of scanning lines conforming to the scanning system such as the television broadcasting system corresponding to the presence or absence of camera shake correction from the first video signal.

In the invention, in order to realize a moving picture of high image quality, the video signal from the imaging element is read out by a first synchronizing signal different from the synchronizing signal of the output image, and the video signal being read out by this first synchronizing signal is converted into a video signal of a second synchronizing signal on the basis of the scanning system such as the intended television broadcasting system.

BRIEF DESCRIPTION OF THE DRAWINGS

Fig. 1 is a block diagram showing an entire constitution of an imaging apparatus in embodiment 1 of the invention.
Fig. 2 is a block diagram showing a specific constitution of a video signal converting circuit in the imaging apparatus in Fig. 1.

Fig. 3 is a block diagram showing a specific constitution of a circuit for interpolating lines or pixels in an interpolating circuit in the video signal converting circuit in Fig. 2.

Fig. 4 is a timing chart showing the relation between a first video signal by video signal generating means in the imaging apparatus in Fig. 1 and a second video signal scanned and converted by scanning converting means, in particular, the relation of horizontal and vertical reference signals.

Fig. 5 is an explanatory diagram of interpolating processing operation in the interpolating circuit in Fig. 3.

Fig. 6 is an explanatory diagram showing a two-dimensional relation between a first video signal generated by video signal generating means and a second video signal after scanning conversion by scanning converting means.

Fig. 7 is a block diagram showing other constitution of synchronizing signal converting circuit in the imaging apparatus in Fig. 1.

Fig. 8 is an explanatory diagram showing a two-dimensional relation in the case of scanning conversion of the video signal obtained by cutting out from part of region of the imaging element by signal generating means, by scanning converting means.

Fig. 9 is a block diagram showing essential parts of an imaging apparatus in embodiment 2 of the invention.

Fig. 10 is an explanatory diagram showing a two-dimensional relation between a first video signal generated by video signal generating means and a second video signal after scanning conversion by scanning converting means in embodiment 2 of the invention.

Fig. 11 is a block diagram showing essential parts of an imaging apparatus in embodiment 3 of the invention.

Fig. 12 is an explanatory diagram showing a two-dimensional relation between a first video signal generated by video signal generating means and a second video signal after scanning conversion by scanning converting means in embodiment 3 of the invention.

Fig. 13 is a block diagram showing essential parts of an imaging apparatus in embodiment 4 of the invention.

Fig. 14 is an explanatory diagram showing a two-dimensional relation between a first video signal generated by video signal generating means and a second video signal after scanning conversion by scanning converting means in embodiment 4 of the invention.

## DETAILED DESCRIPTION OF THE INVENTION

Referring now to the drawings, preferred embodiments of the invention are described below.

(Embodiment 1)

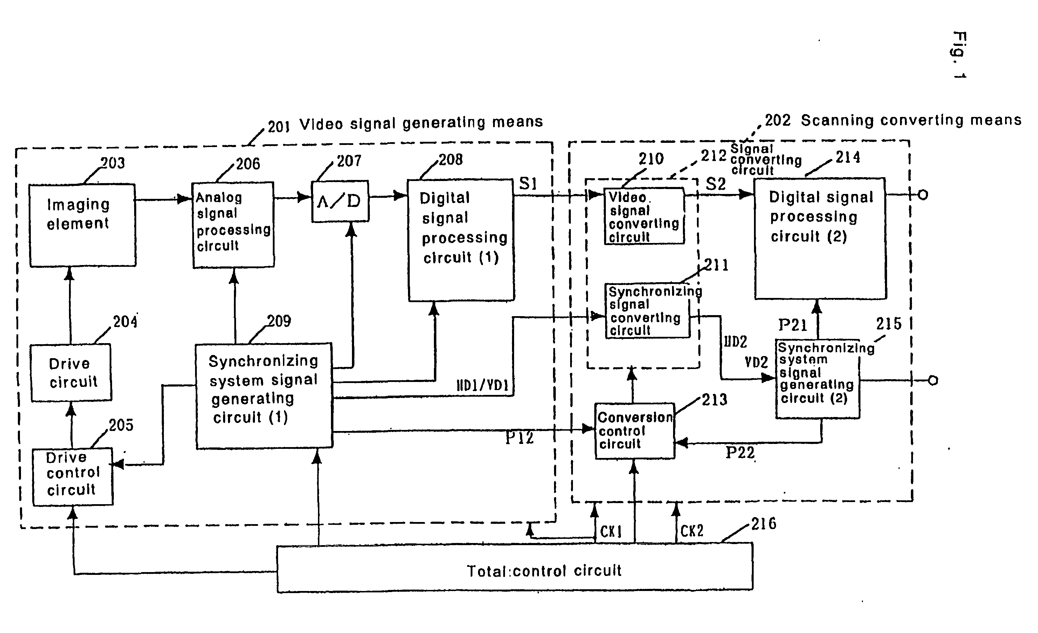

Fig. 1 is a block diagram of an imaging apparatus in embodiment 1 of the invention.

The imaging apparatus of embodiment 1 comprises video signal generating means 201, scanning converting means 202, and a total control circuit 216 for comprehensively controlling the both means 201, 202.

In the following description, all mutually synchronized signals handled in the video signal generating means 201 are collectively called the first synchronizing system, and all mutually synchronized signals handled in the scanning converting means 202 are collectively called the second synchronizing system.

The video signal generating means 201 is for generating video signals on the basis of imaging, and includes an imaging element 203 such as CCD, a drive circuit 204 for driving this imaging element 203, a drive control circuit 205 for controlling the drive circuit 204, an analog signal processing circuit 206 for processing the signal delivered from the imaging element 203 by analog processing such as correlated double sampling (CDS), AGC, or gamma-correction, an A/D converting circuit 207 for digitizing the output of this analog processing circuit 206, a digital signal processing circuit (1) 208 for processing the output of this A/D converting circuit 207 by digital processing such as conversion to YC (or RGB), and a synchronizing system signal generating circuit (1) 209.

The imaging element 203 is, in this example, composed of m1 lines $\times$n1 pixels in the entire imaging region, and in the still picture taking mode, or in the moving picture taking mode without camera shake correction, signals from the entire region (m1$\times$n1) are issued.

The synchronizing system signal generating circuit (1) 209 generates synchronizing clocks necessary for the circuits 205, 206, ..., on the basis of sampling clock CK1, horizontal and vertical reference signals HD1, VD1, and synchronizing signal P12 necessary for phase adjustment between the first synchronizing system and second synchronizing system.

The scanning converting means 202 converts the video signal issued from the video signal generating means 201 in the length of one line, number of lines or the like so as to be conforming to a final scanning system (for example, NTSC scanning system), a signal converting circuit 212 includes a video signal converting circuit 210 for scanning and converting the video signal S1 from the video signal generating means 201, and a synchronizing signal converting circuit 211 for converting the horizontal and vertical reference signals HD1, VD1 from the synchronizing system signal generating circuit (1) 209 into horizontal and vertical reference signals HD2, VD2 of the second synchronizing system, and this synchronizing signal converting circuit 211 is composed, for example, by combining PLL circuit, frequency dividing circuit and others, and includes a conversion control circuit 213 for controlling this signal converting circuit 212, a digital signal processing circuit (2) 214 for processing the output of the video signal converting circuit 210 as specified, and a synchronizing system signal generating circuit (2) 215 for generating reference signal P21 and reference signal P22 of second synchronizing system necessary for the circuits 213, 214, by using sampling clock CK2 and horizontal and vertical reference signals HD2, VD2 of the second synchronizing system.

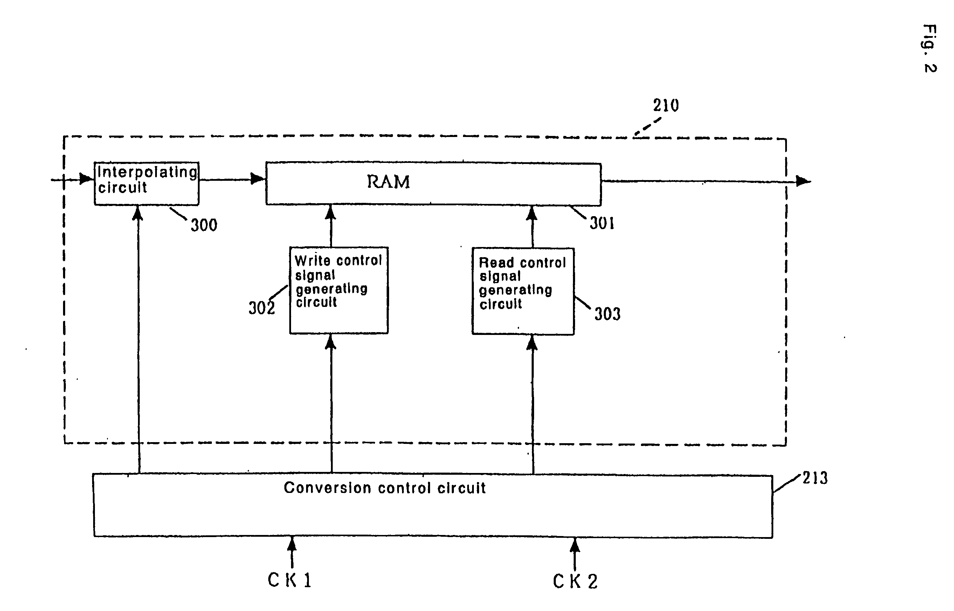

Fig. 2 is a block diagram showing a specific example of constitution of the video signal converting circuit 210.

In the diagram, an interpolating circuit 300 is for interpolating the video signal as specified, as described later, which corresponds to interpolating means mentioned in the claims. A RAM 301 is a RAM capable of controlling writing and reading of video signal independently. A write control signal generating circuit 302 generates a write control signal for the RAM 301. A read control signal generating circuit 303 generates a read control signal for the RAM 301, and these circuits are controlled by the conversion control circuit 213.

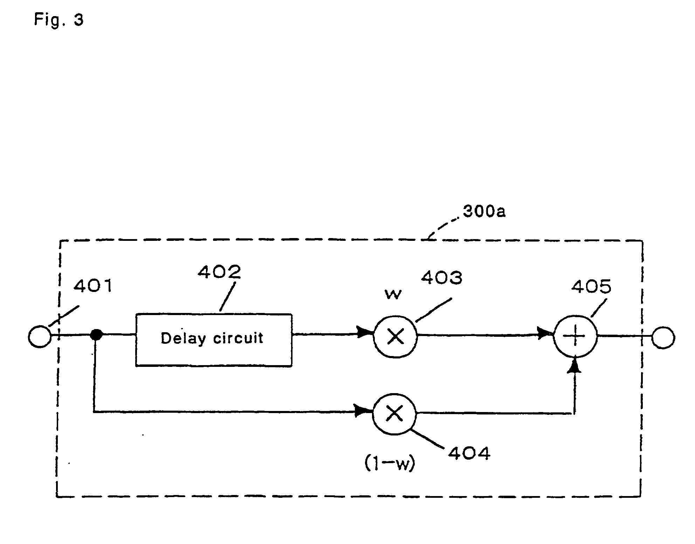

Fig. 3 is a block diagram showing a specific constitution of a circuit 300a for interpolating also lines in the interpolating circuit 300.

In the diagram, an input terminal 401 of video signal is connected to a delay circuit 402 for obtaining a necessary delay, in this case, a delay for one line and a second multiplier 404, and a first multiplier 403 is connected to the output of the delay circuit 402 for multiplying by a specified weighting coefficient w. The second multiplier 404 multiplies the input video signal from the input terminal 401 by a specified weighting coefficient (1 - w). An adder 405 sums up the outputs of the both multipliers 403, 404.

The operation of the imaging apparatus in embodiment 1 is described below. In the still picture taking mode, since there is no particular limitation in the processing time of still picture signals, pixel signals in the entire imaging region may be processed in a specified time. In this case, by taking out the output of the digital signal processing circuit (1) 208, a still picture signal can be obtained. Therefore, in this case, the video signal generating means 201 may be regarded to function also as the still picture generating means, but the output of the digital signal processing circuit (1) 208 may be also obtained as the still picture output through still picture processing circuit (corresponding to the still picture generating means) not shown in the drawing.

In the case of setting in moving picture taking mode not requiring camera shake correction, pixels signals in the almost entire imaging region must be processed within a processing time conforming to the television broadcasting system. The operation in this moving picture taking mode not requiring camera shake correction is described below.

From the imaging element 203, a video signal is read out by a drive signal of the drive circuit 204 according to the control of the drive control circuit 205. At this time, the reading region of the imaging element 203 is determined by the reading position information or the like from the drive control circuit 205 controlled by the entire control circuit 216.

Herein, when the moving picture taking mode not requiring camera shake correction is set, signals of entire region (m1 lines×n1 pixels) is issued from the imaging element 203.

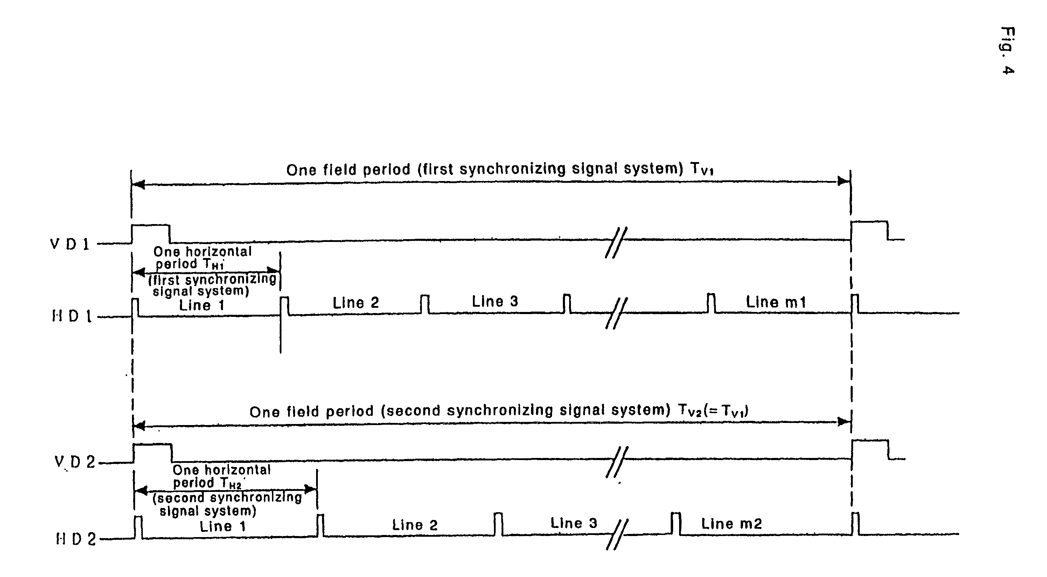

In this case, the video signal obtained in the imaging element 203 is, as shown in Fig. 4, read out in synchronism with vertical reference signal VD1 (generated in every 1 field period: TV1) and horizontal reference signal HD1 (generated in every 1 horizontal period: TH1) generated according to the sampling clock CK1 by the synchronizing system signal generating circuit (1) 209.

The video signal being thus read out is processed by CDS, AGC, gamma-correction or the like in the analog signal processing circuit 206, and is then digitized in the A/D converting circuit 207, and processed in the digital signal processing circuit (1) 208 by, for example, YC conversion or RGB conversion.

The processing operation of the circuits 206, 207, 208 in this case is also synchronized with the horizontal and vertical reference signals HD1, VD1 generated by the synchronizing system signal generating circuit (1) 209 same as in the case above.

Consequently, video signal S1 issued from the video signal generating means 201 and reference signals CK1, HD1, VD1 are also sent into the scanning converting means 202.

The horizontal and vertical synchronizing signals HD1, VD1 entered in the synchronizing signal converting circuit 211 are synchronized with the sampling clock CK2 given to the second synchronizing system, and vertical reference signal VD2 (generated in every 1 field period: TV2) and horizontal reference signal HD2 (generated in every 1 horizontal period: TH2) of the second synchronizing system as shown in Fig. 4 are generated. Further, in the synchronizing system signal generating circuit (2) 215, from the reference signals HD2, VD2 synchronized with the sampling clock CK2, reference signals P21, P22 necessary for the circuits 213, 214 of the second synchronizing system are generated.

On the other hand, the conversion control circuit 213 generates a control signal necessary for the video signal converting circuit 210 in the signal converting circuit 212 using the reference signals P12, P22 of the first and second synchronizing systems.

The video signal converting circuit 210 is controlled by a control signal in this conversion control circuit 213, and interpolates the input video signal S1, and generates a signal having the number of lines (m2 in this case) conforming to the second synchronizing system and specified number of pixels (n2 in this case) in every line. This interpolating process is realized by generating a compressed interpolating signal by the interpolating circuit 300 and RAM 301 in Fig. 2, and controlling it by the conversion control circuit 213.

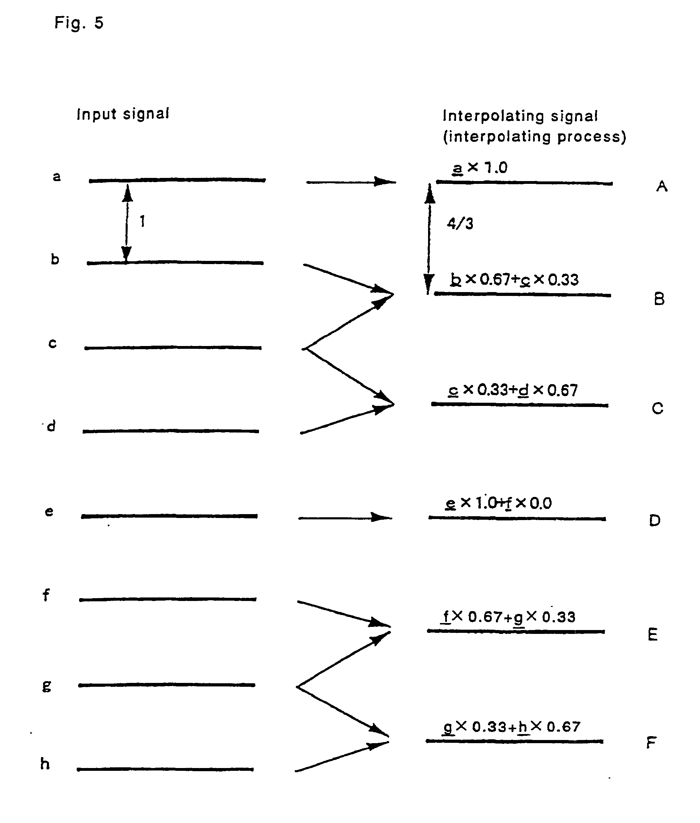

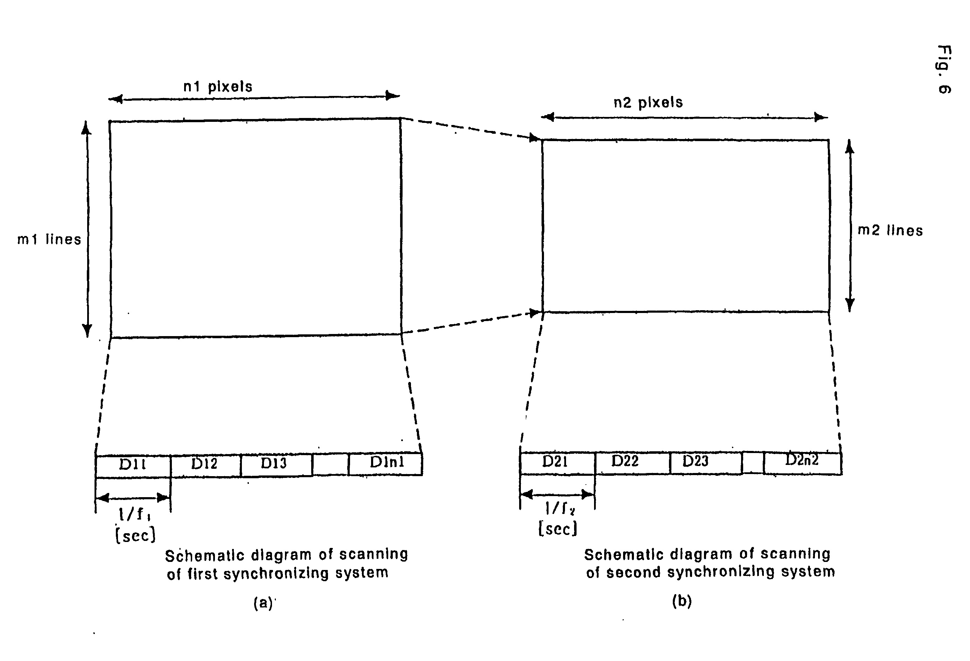

The operation of the video signal converting circuit 210 is further specifically described below by referring to Fig. 5 and Fig. 6.

Fig. 5 shows the operation of obtaining compressed interpolating signals (shown by A, B, C, ... in the diagram) by compressing in the vertical direction at a specified compression rate m2/m1 (herein 3/4) from the input video signals S1 (shown by a, b, c, ... in the diagram).

In Fig. 5, for example, to obtain one interpolating signal B, in the circuit 300a for interpolating the lines in the interpolating circuit 300 shown in Fig. 3, the input video signal b obtained by delaying by one line in the delay circuit 402 and the present input video signal c are multiplied by weighting coefficients w, (1 - w) (herein w = 0.67, 1 - w = 0.33) in the first arid second multipliers 403, 404, respectively, and both signals are added by interpolation in the adder 405. As a result, as shown in Fig. 6, the number of lines in the vertical direction is compressed from m1 to m2 (m1> m2).

In addition, behind the circuit 300a, a circuit 300b in the same constitution as the circuit 300a for interpolating the pixels as the delay circuit for one pixel is connected in series, and the interpolating signal compressed in the vertical direction is also compressed at a specified compression rate n2/n1 successively in the horizontal direction.

Consequently, as shown in Fig. 6, in the horizontal direction (each line), supposing the first synchronizing system to be composed of n1 pixels, in the second synchronizing system, it is compressed to n2 pixels (n1 > n2). In this case, there are unnecessary interpolating signals by (m1 - m2) lines in each field, and unnecessary interpolating signals by (n1 - n2) pixels in each line, but these unnecessary interpolating signals are eliminated, for example, by write control into the RAM 301 by the write control signal generating circuit 302 in Fig. 2, or eliminated by once writing all into the RAM 301 and controlling to read out effective signals only by the read control signal generating circuit 303. In Fig. 5, the interpolating signals generated by input d line and e line are eliminated as being unnecessary.

Finally, the mutual relation of the first synchronizing system and second synchronizing system becomes as shown in Fig. 6.

That is, by interpolating processing of the video signal converting circuit 210, the number of lines in the vertical direction is compressed from m1 lines in the first synchronizing system to m2 lines in the second synchronizing system, and the number of dots in the horizontal direction is compressed from n1 dots in the first synchronizing system to n2 dots in the second synchronizing system, and for this purpose, supposing TV1 and TV2 of the vertical reference signals VD1, VD2 of the first synchronizing system and second synchronizing system are equal to each other for the period of one field (TV1 = TV2), frequencies f1, f2 of sampling clocks CK1, CK2 of the first synchronizing system and second synchronizing system for determining TH1, TH2 in the period of one line of the horizontal reference signals VH1, VH2 of the first synchronizing system and second synchronizing system must satisfy the following condition.

$$m \times n1 \times (1/f1)=m2 \times n2 \times (1/f2) \qquad (1)$$

Therefore, by setting the frequencies f1, f2 of the sampling clocks CK1, CK2 of the first and second synchronizing systems in order to satisfy formula (1), the signal in the imaging region of (m1 lines×n1 pixels) can be read out from the imaging element 203 in the period of one field, and this signal can be converted into a signal of (m2 lines × n2 pixels).

As a result, it is possible to conform to the final output forma (for example, display format or recording format conforming to TV broadcasting system).

Thus, in embodiment 1, in the case of the relation of the first synchronizing system and second synchronizing system in which TV1 = TV1 in the period of one field, and TH1<TH2 in one horizontal period of horizontal reference signals HD1, HD2, in other words, from the imaging element being read out according to the reference signal of the first synchronizing system having the number of lines more than the number of lines in the output system, for example, the imaging element having correction allowance lines for camera shake correction, signals of the number of lines more than the number of lines in the reference signal in the second synchronizing system (for example, all line signals) can be read out and interpolated and converted into signals conforming to the output system or the second synchronizing system. Similarly, in embodiment 1, from the imaging element being read out according to the reference signal of the first synchronizing system having the number of pixels per line more than the number of pixels per line in the output system, for example, the imaging element having correction allowance lines for camera shake correction, signals of the number of pixels more than the number of pixels per line in the reference signal in the second synchronizing system can be read out and interpolated and converted into signals conforming to the output system or the second synchronizing system. As a result, an image of high picture quality is obtained.

Incidentally, embodiment 1 may be modified as follows.

(1) In the imaging apparatus in embodiment 1, by installing the interpolating circuit 300 in the video signal converting circuit 210, only the case of compressed interpolating process on video signal is shown, but to be applicable to an expanded interpolating process for generating video signals of the second synchronizing system of the larger number of lines from the video signal of the smaller number of lines, expanded interpolating signals can be generated by installing an interpolating circuit at the output side of the RAM 301. In this expanded interpolating process, for example, four pixels are generated from three pixels, or four lines from three lines, by interpolating process, so that an interpolating signal is obtained from the combination of same input signals once in every four pixels (or four lines).

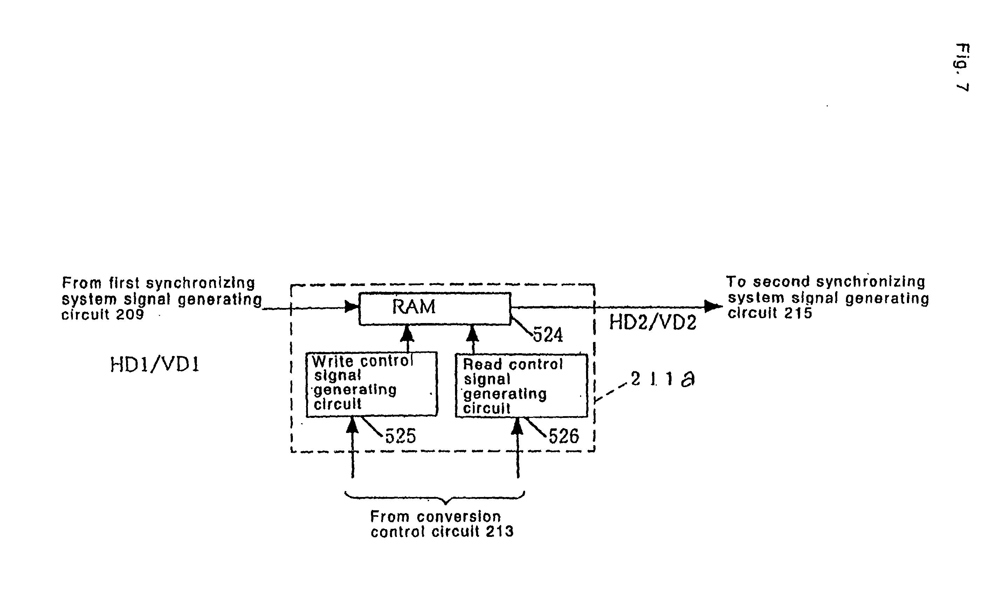

(2) In the synchronizing signal converting circuit 211, in the constitution combining the PLL circuit, dividing circuit and others, the case of converting the first synchronizing system into second synchronizing system is shown, but it is also possible to constitute as shown in Fig. 7.

That is, the synchronizing signal converting circuit 211a in Fig. 7 comprises a RAM 524 for waveform memory, and a write control signal generating circuit 525 and a read control signal generating circuit 526 for controlling write and read of the RAM 524 respectively, and in the period of the sampling clock CK1 of the first synchronizing system, the waveforms of the reference signals HD1, VD1 of the first synchronizing system are stored in the RAM 524, while in the period of the sampling clock CK2 of the second synchronizing system, the stored waveforms in the RAM 524 are read out, thereby generating horizontal and vertical reference signals HD2, VD2 of the second synchronizing system.

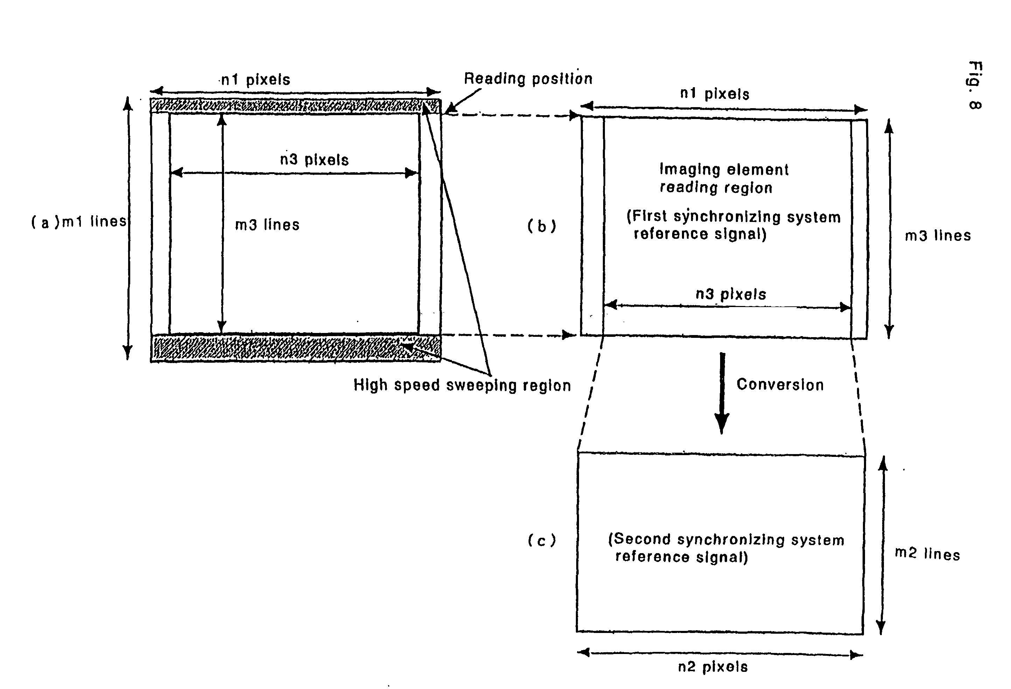

(3) In embodiment 1, output signals of the entire region (m1 lines×n1 pixels) of the imaging element 203 are converted into video signals of the second synchronizing system, but as shown in Fig. 8, by partly limiting the reading region of the imaging element 203, frequencies f1, f2 of the sampling clocks CK1, CK2 of the specified first and second synchronizing system can be set easily while maintaining the aspect ratio of display conforming to the NTSC television broadcasting system or the like.

That is, by the control of the drive control circuit 205, in Fig.8 (a), of the entire region (m1 lines×n1 pixels) of the imaging element 203, upper and lower end regions are eliminated by high speed sweeping action, and only the signals of (m3 lines×n1 pixels) are read out as video signals (see Fig. 8 (b)).

Video signals of (m3 lines × n3 pixels) in part of (m3 lines ×n1 pixels) of the first synchronizing system are converted into video signals of (m2 lines × n2 pixels) by the video signal converting circuit 210 of the scanning converting means 202.

In this case, the mutual relation of the first synchronizing system and second synchronizing system is not the relation in formula (1), but must satisfy the relation of

$$m3 \times n1 \times (1/f1)=m2 \times n2 \times (1/f2) \qquad (2)$$

That is, not limited by the magnitude of the entire imaging region (m1 × n1) of the imaging element 203, since frequencies f1 and f2 of sampling clocks CK1, CK2 of the first and second synchronizing systems can be set by the relation of its partial region (m3 × n1) and final output system (m2 × n2), the ratio of the both frequencies f1, f2 may be set to a simple ratio of an integer, so that a simpler system constitution may be realized.

Meanwhile, in the explanation of Fig. 8, all signals of the number of pixels n1 in the horizontal direction are read out from the imaging element 203, but as for the imaging element 203, for example, by high speed sweep control in the horizontal direction, signals in an arbitrary region (m3 lines×n3 pixels) in the entire imaging region (m1 lines×n1 pixels) of the imaging element 203 are read out as first synchronizing system signals, and the same effects are obtained by converting all of thus read-out video signals S1 into video signals S2 of the second synchronizing system.

In this case, when cutting out an arbitrary region (m3 lines × n3 pixels) for converting into video signals of the second synchronizing system from the entire imaging region (m1×n1) of the imaging element 203, by using the camera shake correction information, both correction of camera shake and generation of image of high picture quality and wide angle of view can be realized.

(Embodiment 2)

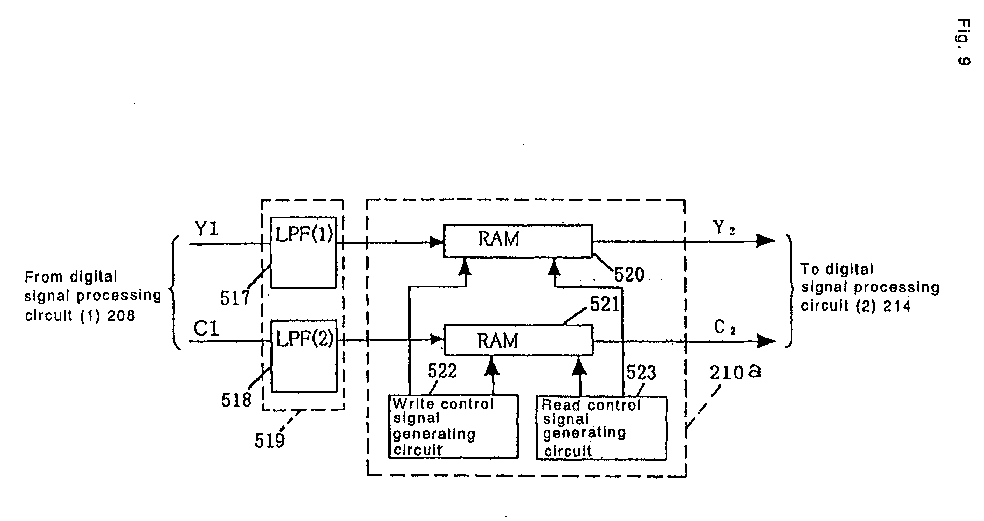

Fig. 9 is a block diagram of an imaging apparatus in embodiment 2, and the parts corresponding to the constitution of embodiment 1 shown in Fig. 1 through Fig. 3 are identified with same reference numerals.

A feature of the imaging apparatus in this embodiment 2 is that a vertical filter circuit 519 is provided in order to remove high frequency components contained in the output signal from the digital signal processing circuit (1) 208, and this vertical filter circuit 519 comprises a filter circuit (1) 517 for filtering luminance signal Y1 in the vertical direction, and a filter circuit (2) 518 for filtering chrominance signal C1 in the vertical direction.

This vertical filter circuit 519 is intended to prevent occurrence of aliasing because the frequency f2 of the sampling clock CK2 of the second synchronizing system is lower than the frequency f1 of the sampling clock CK1 of the first synchronizing system.

A video signal converting circuit 210a is intended to convert video signals Y1, C1 from the vertical filter circuit 519 to video signals conforming to the final scanning system, and comprises a RAM 520 for luminance signal and a RAM 521 for chrominance signal for doing write operation and read operation independently, and a write control signal generating circuit 522 and a read control generating circuit 523 for both RAMs 520, 521.

In this embodiment 2, the signals passing through the filter circuit 519 and limited in band are processed by sub-sampling (decimating) the number of lines for the video signals to be entered, by write control or read control on the RAMs 520, 521 by the conversion control circuit 213.

The other constitution is same as in embodiment 1 shown in Fig. 1 through Fig. 3, and detailed description is omitted.

The operation of the imaging apparatus in embodiment 2 is explained below mainly relating to a method of processing the pixel signals nearly in the entire imaging region within a processing time conforming to the television broadcasting system.

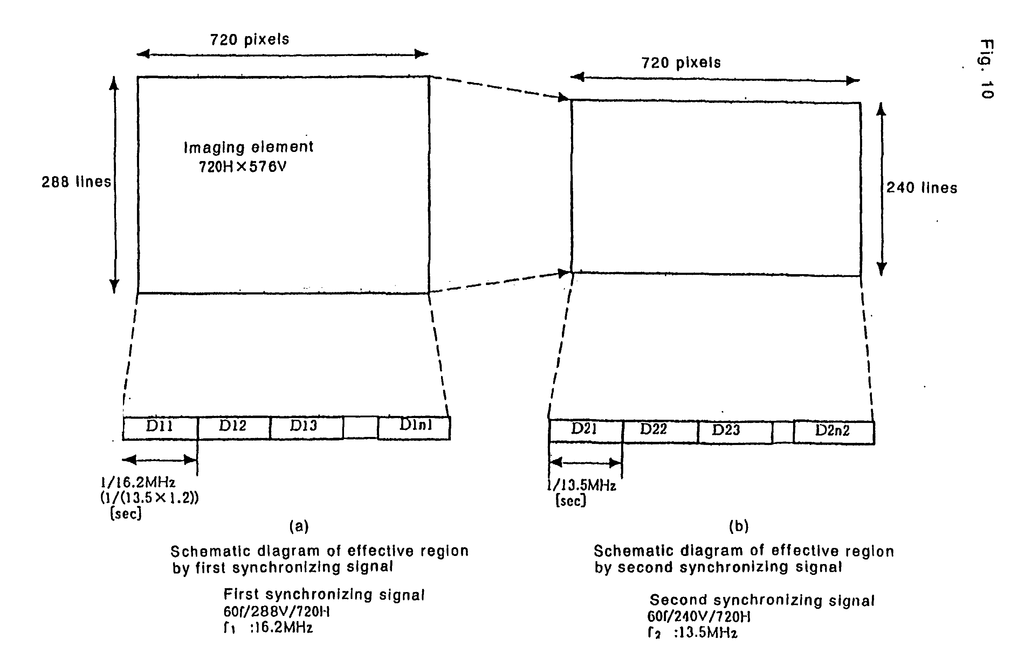

Herein, the imaging element 203 has a larger number of lines than the number of scanning lines of television broadcasting system such as NTSC or PAL. That is, in this imaging element 203, as shown in Fig. 10 (a), the effective region being read out from the this element is composed of 720 pixels in the horizontal direction, and 576 lines in the vertical direction, and in the mode of reading out by mixing two pixels each in the vertical direction, the number of effective lines is 288 lines in the period of one field, at 60 fields/second, and the number of effective pixels in the period of one line is 720 pixels.

The video signals being delivered from the imaging element 203 on the basis of the horizontal and vertical reference signals HD1/VD1 of the first synchronizing system pass through the analog signal processing circuit 206, A/D converting circuit 207, and digital signal processing circuit (1) 208, and become luminance signal Y1 and chrominance signal C1.

These video signals Y1, C1 are limited in the frequency band in the vertical direction by the vertical filter circuit 519. In this case, the limiting ratio of frequency band is about 5/6, same as the ratio of the number of lines (=240/288) as mentioned below.

The video signals Y1, C1 thus limited in the frequency band in the vertical direction are converted into video signals Y2, C2 of the second synchronizing system by the video signal converting circuit 210a.

That is, in the video signal converting circuit 210a, in the output signal of the vertical filter circuit 519, decimating one line out of every six lines, the remaining five lines are sampled by the horizontal reference signal HD2 and sampling clock CK2 of the second synchronizing system. This sub-sampling process (decimating process) of one line is effected when writing in or reading out the both RAMs 520, 521.

At this time, since the frequency band in the vertical direction is preliminarily limited by the vertical filter circuit 519, if the frequency f2 of the sampling clock CK2 of the second synchronizing system is lower than the frequency f1 of the sampling clock CK1 of the first synchronizing system, occurrence of aliasing can be prevented.

Thus, the video signal converted by the video signal converting circuit 210a is as shown in Fig. 10 (b), that is, at 60 fields/second, the number of effective lines is 240 lines in the period of one field and the number of effective pixels is 720 pixels in the period of one line.

Herein, in the scanning system conforming to the NTSC television broadcasting system, 60 fields/second, 525/2 (=262.5) lines/field, sampling of 858 pixels/line, and the frequency f2 of the sampling clock CK2 is 13.5 MHz, but the effective image data in the digital recording format (DV format) is the quantity of data shown in Fig. 10 (b).

Afterwards, the luminance signal Y2 and chrominance signal C2 generated by this signal conversion are processed by the digital signal processing circuit (2) 214, and converted into signals conforming to the display format or record format of the television broadcasting system in a later stage.

Incidentally, depending on the imaging element being used, the number of effective lines in the period of one field shown in Fig. 10 may be different from 288 lines, and in such a case, by reading out the number of lines forming a simple integer ratio to the number of effective lines of the second synchronizing system from the imaging element 203, similar processing is possible by controlling the filter characteristic of the vertical filter circuit 519 conforming to this ratio of number of lines and the RAMs 520, 521 of the video signal converting circuit 210a.

Thus, in the imaging apparatus according to embodiment 2, when reading out the video signal having a larger number of horizontal scanning lines as compared with the scanning system-on the basis of the NTSC television broadcasting system, after necessary frequency band limiting in the vertical filter circuit 519, video signals Y2, C2 of the second synchronizing system are generated by sub-sampling process (decimating process) in the video signal converting signal 210a, video signals of high picture quality will be obtained.

It corresponds, for example, to a case of using one for PAL as the imaging element 203 having a correction allowance line for camera shake correction, and delivering in the display format of NTSC broadcasting system, so that a video signal of high picture quality and wide angle of view will be obtained.

(Embodiment 3)

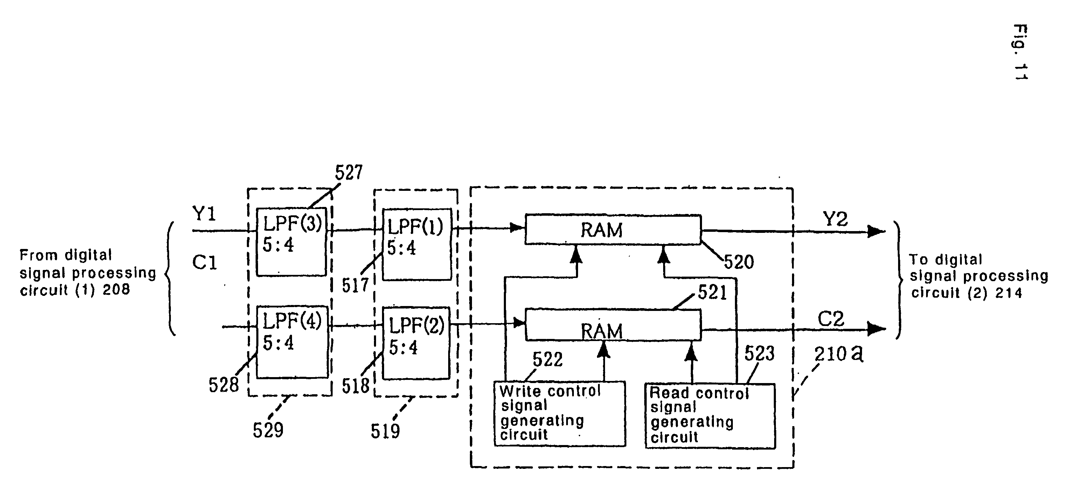

Fig. 11 is a block diagram of an imaging apparatus according to embodiment 3, and parts corresponding to embodiment 2 shown in Fig. 9 are identified with same reference numerals.

It is a feature of the imaging apparatus of embodiment 3 that a horizontal filter circuit 529 for filtering the output signal from the digital signal processing circuit (1) 208 in the horizontal direction is added to the constitution in Fig. 9.

This horizontal filter circuit 529 comprises a filter circuit (3) 527 for filtering luminance signal Y1 in the horizontal direction, and a filter circuit (4) 528 for filtering chrominance signal C1 in the horizontal direction.

In this embodiment 3, by write control or read control to the RAMs 520, 521 by the conversion control circuit 213, it is constituted to process the number of lines of input video signal by sub-sampling (decimating), and also process the pixels in the horizontal direction by sub-sampling (decimating).

The other constitution is same as embodiment 2 shown in Fig. 9, and detailed description is omitted.

The operation of the imaging apparatus in embodiment 3 is explained below, same as in embodiment 2, mainly relating to a method of processing the pixel signals nearly in the entire imaging region within a processing time conforming to the television broadcasting system.

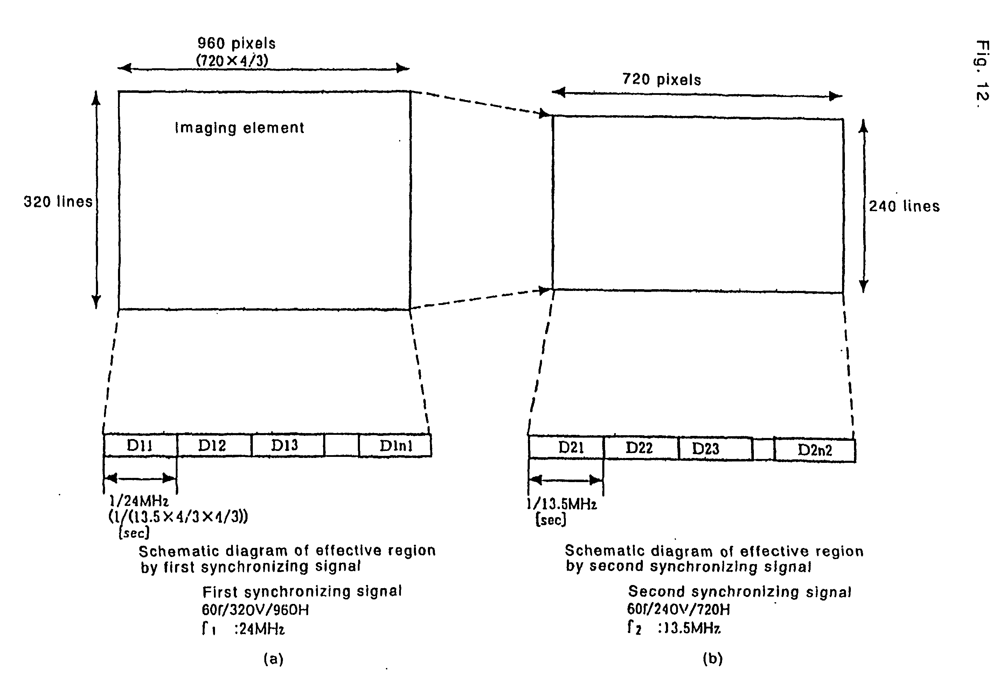

Herein, the imaging element 203 has a larger number of lines than the number of scanning lines of television broadcasting system such as NTSC or PAL. That is, in this imaging element 203, as shown in Fig. 12 (a), the effective region being read out from this element is composed of 960 pixels in the horizontal direction, and 640 lines in the vertical direction, and in the mode of reading out by mixing two lines in the vertical direction, the number of effective lines is 320 lines in the period of one field, at 60 fields/second, and the number of effective pixels in the period of one line is 960 pixels.

The video signals being delivered from the imaging element 203 on the basis of the horizontal and vertical reference signals HD1/VD1 of the first synchronizing system pass through the analog signal processing circuit 206, A/D converting circuit 207, and digital signal processing circuit (1) 208, and become luminance signal Y1 and chrominance signal C1.

These video signals Y1, C1 are limited in the frequency band in the horizontal direction by the horizontal filter circuit 529, and further limited in the frequency band in the vertical direction by the vertical filter circuit 519.

In this case, the limiting ratio of frequency band is, as described below, 3/4, same as the ratio of the number of pixels, in the horizontal direction, and about 3/4, same as the ratio of the number of lines, in the vertical direction.

Video signals Y1, C1 thus limited in the frequency band in the horizontal direction and vertical direction are converted into video signals Y2, C2 of the second synchronizing system by the video signal converting circuit 210a.

That is, in the video signal converting circuit 210a, decimating one line out of every four lines in the output signal of the vertical filter circuit 519, the remaining three effective lines are sampled by the sampling clock CK2 of the second synchronizing system by decimating one pixel from every four pixels in the horizontal direction in every line. That is, two-dimensional sub-sampling process (decimating process) is done by the video signal converting circuit 210a. This sub-sampling process (decimating process) is effected when writing in or reading out the RAMs 520, 521.

At this time, since the frequency band in the horizontal direction and vertical direction is preliminarily limited by the horizontal filter circuit 529 and vertical filter circuit 519, if the frequency f2 of the horizontal reference signal HD2 and sampling clock CK2 of the second synchronizing system is lower than the frequency f1 of the horizontal reference signal HD1 and sampling clock CK1 of the first synchronizing system, occurrence of aliasing can be prevented.

Thus, the video signal converted by the video signal converting circuit 210a is as shown in Fig. 12 (b), that is, at 60 fields/second, the number of effective lines is 240 lines in the period of one field and the number of effective pixels is 720 pixels in the period of one line.

Herein, in the scanning system conforming to the NTSC television broadcasting system, 60 fields/second, 525/2 (=262.5) lines/field, sampling of 858 pixels/line, and the frequency f2 of the sampling clock CK2 is 13.5 MHz, but the effective image data in the digital recording format (DV format) is the quantity of data shown in Fig. 12 (b).

Afterwards, the luminance signal Y2 and chrominance signal C2 generated by this signal conversion are processed by the digital signal processing circuit (2) 214, and converted into signals conforming to the display format or record format of the television broadcasting system in a later stage.

Incidentally, depending on the imaging element 203 being used, the number of effective lines in the period of one field shown in Fig. 12 (a) may be different from 320 lines, or the number of horizontal effective pixels may be different from 960 pixels, and in such a case, similar processing is possible by reading out the number of lines forming a simple integer ratio to the number of effective lines of the second synchronizing system from the imaging element 203, controlling the filter characteristic of the vertical filter circuit 519 conforming to this ratio of number of lines, or determining a simple integer ratio to the number of effective horizontal pixels of the second synchronizing system, and controlling the filter characteristic of the horizontal filter circuit 529 conforming to this ratio of number of pixels, controlling the RAMs 520, 521 of the video signal converting circuit 210a, and sub-sampling (decimating) the number of lines and the number of horizontal pixels.

Thus, in the imaging apparatus according to embodiment 3, when reading out the video signal having a larger number of scanning lines from the imaging element 203 as compared with the synchronizing signal according to NTSC television broadcasting system, and when sub-sampling (decimating) the number of pixels in every line, after necessary frequency band limiting in the horizontal filter 529 and vertical filter circuit 519, video signals Y2, C2 of the second synchronizing system are generated in the video signal converting signal 210a, video signals of high picture quality will be obtained.

Incidentally, in embodiment 3, since decimating process in the horizontal direction after horizontal filter processing is done nearly at the same time as decimating process in the vertical direction by write control or read control of the RAMs 520, 521 of the video signal converting circuit 210a, the sequence of the horizontal filter circuit 529 and vertical filter circuit 519 may be freely inverted.

However, the invention is not limited to this example, and in the constitution of executing vertical filter process after horizontal filter process, for instance, plural line memories are necessary for vertical filter process, and therefore the horizontal direction can be decimated in write control or read control in the line memories.

(Embodiment 4)

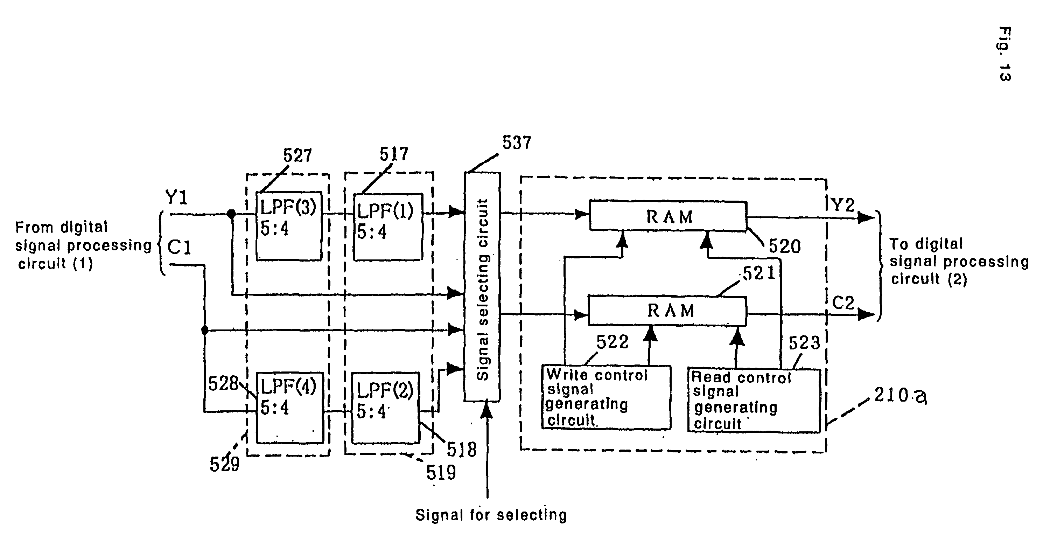

Fig. 13 is a block diagram of an imaging apparatus according to embodiment 4, and parts corresponding to embodiment 3 shown in Fig. 11 are identified with same reference numerals.

In the imaging apparatus in embodiment 4, a signal selecting circuit 537 is provided between the vertical filter circuit 519 and video signal converting circuit 210a.

The signal selecting circuit 537 is to select any one signal of the video signals Y1, C1 delivered from the digital signal processing circuit (1) 208, and the video signal delivered from the vertical filter circuit 519 through the horizontal filter circuit 529, and when either high picture quality mode or camera shake correction mode is specified by a mode setting circuit not shown in the drawing, it is designed to change over to the specified mode.

The other constitution is same as in embodiment 3 shown in Fig. 11, and detailed description is omitted.

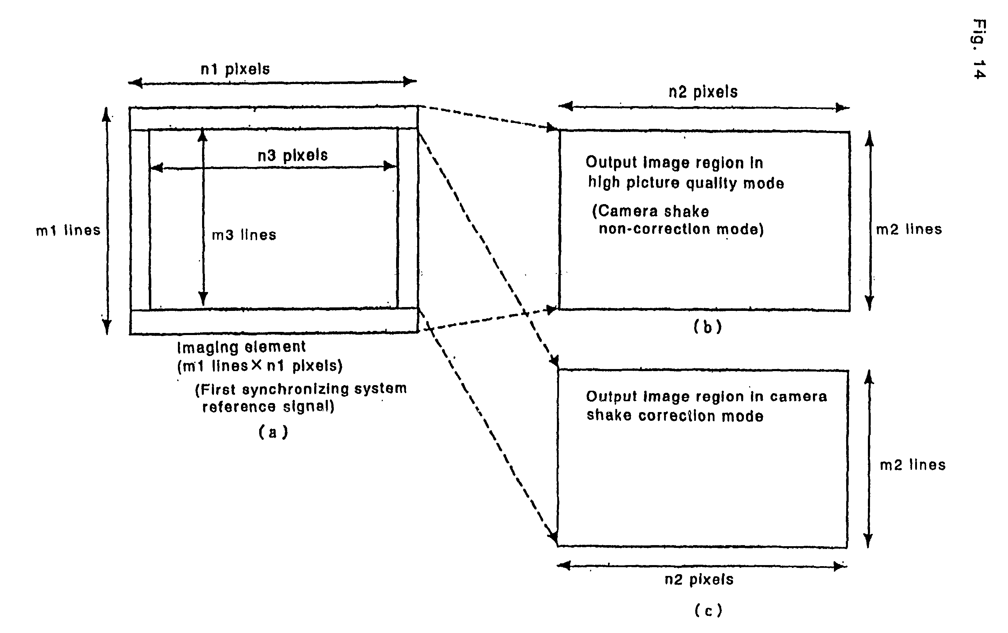

The relation between the video signal being read out from the imaging element 203 and the scanning conversion by the video signal converting circuit 210a is shown in Fig. 14.

In the imaging apparatus of embodiment 4, too, same as in embodiments 1 to 3, the imaging element 203 is as shown in Fig. 14 (a), and the entire imaging region is composed of m1 lines ×n1 pixels, and the number of scanning lines is larger than that of the scanning system of television broadcasting system.

When the high picture quality mode is set by the mode setting circuit not shown in the drawing, as shown in Fig. 14 (b), on the basis of the video signal being read out from the entire region (m1 lines×n1 pixels) of the imaging element 203, the scanning converting means 202 converts into a video signal (m2 lines × n2 pixels) conforming to the final scanning system.

In the case of this high picture quality mode, the signal selecting circuit 537 selects the output signal limited in frequency band from the horizontal filter circuit 529 through the vertical filter circuit 519, and the video signals Y1, C1 are entered in the video signal converting circuit 210a.

The video signal converting circuit 210a process the input video signals Y1, C1 by sampling by the sampling clock CK2 of the second synchronizing system, by write control or read control to the RAMs 520, 521.

On the other hand, when the camera shake correction mode is set by the mode setting circuit not shown in the drawing, to suppress image drift by camera shake, the scanning converting means 202 converts to the video signal (m2 lines × n2 pixels) conforming to the final scanning system as shown in Fig. 14 (c) according to the video signal being read out from part of region (m3 lines×n3 pixels) of the imaging element 203.

In the case of this camera shake correction mode, the signal selecting circuit 537 selects the video signal S1 directly delivered from the digital processing circuit (1) 208 (that is, selects the signal not passing through the filter circuits 529, 519), and this video signal S1 not limited in frequency band is put into the video signal converting circuit 210a.

The video signal converting circuit 210a cuts out a video signal in a region (an imaging region of m3 lines x n3 pixels) corresponding to the image of which screen drift is suppressed, by write control or read control to the RAMs 520, 521, on the basis of the camera shake information (not shown) for suppressing screen drift by camera shake.

That is, in Fig. 14 (a), the range for cutting out for m3 lines for camera shake correction is to move up and down according to the camera shake information within the width for m1 lines, corresponding to the image drift. Similarly, the range for cutting out for n3 pixels is to move right and left according to the camera shake information within the width for n1 pixels corresponding to the screen drift. As described above, in a camera shake correction mode, the view angle becomes narrower than that in a camera shake non-correction mode.

Thus, in this embodiment 4, installing the signal selecting circuit 537, by selecting the output signal of the filter circuits 529, 519 depending on the mode setting, or selecting the signal not passing through the filter circuits 529, 519, in high picture quality mode, an image of high picture quality and wide angle of view is obtained by using signals in almost entire region of the imaging element 203, or, in camera shake correction mode, on the other hand, using signals in part of the region of the imaging element 203 by the camera shake information, an image suppressed in screen drift can be obtained.

The embodiment 4 is intended to apply the camera shake correction mode in the imaging apparatus in the embodiment 3, but by employing the constitution applicable to camera shake correction similarly in the imaging apparatus in embodiments 1 and 2, same effects can be obtained.

The camera shake information in embodiment 4 includes motion detection sensor information by angular velocity sensor or the like, and motion vector information by video signal detection, but may also include others.

In the embodiments 1 to 4, the interpolating process is the linear interpolation, but, not limited to this, quadratic interpolation or convolutional interpolation may be employed.

In the embodiments 2 to 4, the digital signal processing circuit (1) 208 generates luminance signal Y and chrominance signal C, but not limited to this, for example, RGB signals may be generated, and the RGB signals may be processed similarly.

When generating luminance signal Y and chrominance signal C, the required RAM capacity may be curtailed by narrowing the frequency band of the chrominance signal by the difference in resolution of the human eye to the luminance signal and chrominance signal.

In the embodiments 1 to 4, in the imaging apparatus using the imaging element 203 for camera shake correction, it is mainly explained to obtain the image of high picture quality in the case not correcting for camera shake, but not limited to this, for example, in the imaging apparatus corresponding to XGA (horizontal 1024 × vertical 768), or SXGA (horizontal 1280 × vertical 960), or horizontal 160 × vertical 1200, or horizontal 2000 × vertical 1500, for example, in the system mainly designed for still picture taking, the same effects can be obtained when obtaining the image of high picture quality.

In the embodiments 1 to 4, as the imaging element 203, single plate system or triple plate system is not mentioned, but not limited as single plate or triple plate, same effects can be obtained in single plate system, double plate system or triple plate system.

**Claims**

1. An imaging apparatus comprising:

    an imaging element (203),
    video signal generating means (201) for generating a first video signal from an output of said imaging element,
    selecting means for selecting between a still picture mode which produces a still image and a moving picture mode which produces a moving image,
    still picture generating means for generating a still picture from the first video signal, corresponding to an imaging region of the imaging element, when the selecting means select the still picture mode, and
    scanning converting means (202) for generating a second video signal from the first video signal, corresponding to a section of said imaging region which excludes respective areas extending between borders of said imaging region and borders of said section of said imaging region, when the selecting means select the moving picture mode.

2. An imaging apparatus of claim 1, wherein the relation of the first video signal in still picture mode and the second video signal in moving picture mode is set in the moving picture mode so as to satisfy the condition of

$$m1 \times n1 \times (1/f1) = m2 \times n2 \times (1/f2)$$

where m1 is the number of lines of the first video signal obtained in still picture mode, n1 is the number of pixels in the horizontal direction of the first video signal in still picture mode, f1 is the frequency of sampling clock of the first video signal in still picture mode, m2 is the number of lines of the second video signal in moving picture mode, n2 is the number of pixels in the horizontal direction of the second video signal in moving picture mode, and f2 is the frequency of the sampling clock of the second video signal in moving picture mode.

3. An imaging apparatus of claim 1, said apparatus further comprising means for adjusting the location of said section of said imaging region relative to said imaging region based on information which corresponds to shake of a camera in which said imaging element is situated.

4. An imaging apparatus of claim 1, wherein in still picture mode said first video signal is converted to a corresponding image on a screen, and in moving picture mode said second video signal is converted to a corresponding moving image on said screen.

5. An imaging apparatus of claim 1 or 4, wherein the second video signal receives shorter processing time in said moving picture mode than the first video signal in said still picture mode.

**Patentansprüche**

1. Bildaufnahmevorrichtung, mit:

    einem Bildaufnahmeelement (203),

    einer Videosignal-Erzeugungseinrichtung (201) zum Erzeugen eines ersten Videosignals aus einer Ausgabe des Bildaufnahmeelements,

    eine Auswahleinrichtung zum Wählen zwischen einem Standbildmodus, der ein Standbild erzeugt, und einem Bewegtbildmodus, der ein Bewegtbild erzeugt,

einer Standbild-Erzeugungseinrichtung zum Erzeugen eines Standbildes aus dem ersten Videosignal in Entsprechung zu einem Bildaufnahmebereich des Bildaufnahmeelements, wenn die Wahleinrichtung den Standbildmodus wählt, und

einer Abtastumwandlungseinrichtung (202) zum Erzeugen eines zweiten Videosignals aus dem ersten Videosignal in Entsprechung zu einem Abschnitt des zweiten Bildaufnahmebereichs, wobei entsprechende Bereiche zwischen den Rändern des Bildaufnahmebereichs und den Rändern des Abschnitt des Bildaufnahmebereichs ausgeschlossen sind, wenn die Auswahleinrichtung den Bewegtbildmodus wählt.

2. Bildaufnahmevorrichtung nach Anspruch 1, wobei die Beziehung zwischen dem ersten Videosignal im Standbildmodus und dem zweiten Videosignal im Bewegtbildmodus im Bewegtbildmodus derart gesetzt wird, dass die folgende Bedingung erfüllt wird:

$$m1 \times n1 \times (1/f1) = m2 \times n2 \times (1/f2)$$

wobei m1 die Anzahl der Zeilen des im Standbildmodus erhaltenen ersten Videosignals ist, n2 die Anzahl der Bildpunkte in der horizontalen Richtung des ersten Videosignals im Standbildmodus ist, f1 die Frequenz des Abtasttakts des ersten Videosignals im Bewegtbildmodus ist, m2 die Anzahl der Zeilen des zweiten Videosignals im Bewegtbildmodus ist, n2 die Anzahl der Bildpunkte in der horizontalen Richtung des zweiten Videosignals im Bewegtbildmodus ist und f2 die Frequenz des Abtasttakts des zweiten Videosignals im Bewegtbildmodus ist.

3. Bildaufnahmevorrichtung nach Anspruch 1, wobei die Vorrichtung weiterhin eine Einrichtung zum Anpassen der Position des Abschnitts des Bildaufnahmebereichs relativ zu dem Bildaufnahmebereich auf der Basis von Informationen umfasst, die dem Zittern einer Kamera entsprechen, in welcher das Bildaufnahmeelement angeordnet ist.

4. Bildaufnahmevorrichtung nach Anspruch 1, wobei in dem Standbildmodus das erste Videosignal zu einem entsprechenden Bild auf einem Bildschirm umgewandelt wird, und wobei in dem Bewegtbildmodus das zweite Videosignal zu einem entsprechenden Bewegtbild auf dem Bildschirm umgewandelt wird.

5. Bildaufnahmevorrichtung nach Anspruch 1 oder 4, wobei das zweite Videosignal eine kürzere Verarbeitungszeit in dem Bewegtbildmodus erhält als das erste Videosignal in dem Standbildmodus.

## Revendications

1. Appareil de prise de vues comprenant :

un imageur (203),
des moyens de production de signaux vidéo (201) pour produire un premier signal vidéo depuis une sortie dudit imageur,
des moyens de sélection pour sélectionner entre un mode arrêt sur image qui produit une image fixe et un mode image animée qui produit une image en mouvement,
des moyens de génération d'arrêt sur image pour générer une image fixe à partir du premier signal vidéo, correspondant à une surface imageable de l'imageur, lorsque les moyens de sélection sélectionnent le mode arrêt sur image, et
des moyens conversion par balayage (202) pour générer un second signal vidéo à partir du premier signal vidéo, correspondant à une section de ladite surface imageable qui exclut les zones respectives s'étendant entre les bords de ladite surface imageable et les bords de ladite section de ladite surface imageable, lorsque les moyens de sélection sélectionnent le mode image animée.

2. Appareil de prise de vues selon la revendication 1, dans lequel la relation du premier signal vidéo en mode arrêt sur image et du second signal vidéo en mode image animée est déterminée dans le mode image animée de manière à satisfaire à la condition :

$$m1 \times n1 \times (1/f1) = m2 \times n2 \times (1/f2)$$

où m1 est le nombre de lignes du premier signal vidéo obtenu en mode arrêt sur image, n1 est le nombre de pixels dans la direction horizontale du premier signal vidéo en mode arrêt sur image, f1 est la fréquence de l'horloge d'échantillonnage du premier signal vidéo en mode arrêt sur image, m2 est le nombre de lignes du second signal vidéo en mode image animée, n2 est le nombre de pixels dans la direction horizontale du second signal vidéo en mode image animée, et f2 est la fréquence de l'horloge de prélèvement du second signal vidéo en mode image animée.

3. Appareil de prise de vues selon la revendication 1, ledit appareil comprenant, en outre, des moyens pour ajuster l'emplacement de ladite section de ladite surface imageable par rapport à ladite surface imageable sur la base des informations qui correspondent à la trépidation d'un appareil de prise de vues dans lequel est situé ledit imageur.

4. Appareil de prise de vues selon la revendication 1, dans lequel en mode arrêt sur image ledit premier signal vidéo est converti en une image correspondante sur un écran, et en mode image animée ledit second signal vidéo est converti en une image animée correspondante sur ledit écran.

5. Appareil de prise de vues selon la revendication 1 ou 4, dans lequel ledit second signal vidéo reçoit un temps de traitement dans ledit mode image animée plus court que le premier signal vidéo dans ledit mode arrêt sur image.

Fig. 1

Fig. 1

201 Video signal generating means

202 Scanning converting means

- 203 Imaging element
- 206 Analog signal processing circuit
- 207 A/D
- 208 Digital signal processing circuit (1) — S1
- 204 Drive circuit
- 205 Drive control circuit
- 209 Synchronizing system signal generating circuit (1)
- 210 Video signal converting circuit — S2
- 212 Signal converting circuit
- 211 Synchronizing signal converting circuit
- 214 Digital signal processing circuit (2)
- 213 Conversion control circuit
- 215 Synchronizing system signal generating circuit (2)
- 216 Total control circuit

HD1/VD1
HD2
VD2
P12
P21
P22
CK1
CK2

Fig. 2

Fig. 3

Fig. 4

One field period (first synchronizing signal system) $T_{V1}$

Line m1

Line 3

Line 2

One horizontal period $T_{H1}$ (first synchronizing signal system) Line 1

One field period (second synchronizing signal system) $T_{V2}(=T_{V1})$

Line m2

Line 3

Line 2

One horizontal period $T_{H2}$ (second synchronizing signal system) Line 1

V D 1

H D 1

V D 2

H D 2

Fig. 5

Input signal

Interpolating signal
(interpolating process)

a —————————— $\underline{a} \times 1.0$ —————————— A

↕ 1    4/3

b —————————— $\underline{b} \times 0.67 + \underline{c} \times 0.33$ —————————— B

c —————————— $\underline{c} \times 0.33 + \underline{d} \times 0.67$ —————————— C

d

e —————————— $\underline{e} \times 1.0 + \underline{f} \times 0.0$ —————————— D

f —————————— $\underline{f} \times 0.67 + \underline{g} \times 0.33$ —————————— E

g —————————— $\underline{g} \times 0.33 + \underline{h} \times 0.67$ —————————— F

h

Fig. 6

Schematic diagram of scanning of first synchronizing system (a)

Schematic diagram of scanning of second synchronizing system (b)

Fig. 7

To second synchronizing
system signal generating
circuit 215

HD2/VD2

2 1 1 a

| RAM | 524 |

Read control
signal
generating
circuit 526

Write control
signal
generating
circuit 525

From conversion
control circuit 213

From first synchronizing
system signal generating
circuit 209

HD1/VD1

19

Fig. 8

EP 0 926 888 B1

n1 pixels

Reading position

n3 pixels

(a) m1 lines

m3 lines

High speed sweeping region

n1 pixels

(b) Imaging element reading region

(First synchronizing system reference signal)

m3 lines

n3 pixels

Conversion

(c) (Second synchronizing system reference signal)

m2 lines

n2 pixels

20

Fig. 9

Fig. 10

EP 0 926 888 B1

720 pixels

720 pixels

288 lines

Imaging element
720H×576V

240 lines

| D11 | D12 | D13 | | D1n1 |

| D21 | D22 | D23 | | D2n2 |

1/16.2MHz
(1/(13.5×1.2))
[sec]

1/13.5MHz
[sec]

(a)

Schematic diagram of effective region
by first synchronizing signal

First synchronizing signal
60f/288V/720H
f₁ :16.2MHz

(b)

Schematic diagram of effective region
by second synchronizing signal

Second synchronizing signal
60f/240V/720H
f₂ :13.5MHz

Fig. 11

EP 0 926 888 B1

From digital signal processing circuit (1) 208

Y1
C1

527
LPF(3) 5:4
528
LPF(4) 5:4
529

517
LPF(1) 5:4
518
LPF(2) 5:4
519

RAM
520

521
RAM

522
Write control signal generating circuit

523
Read control signal generating circuit

210 a

Y2

C2

To digital signal processing circuit (2) 214

Fig. 12.

240 lines

720 pixels

D2n2

D23

D22

D21

$1/13.5MHz$ [sec]

Schematic diagram of effective region by second synchronizing signal

Second synchronizing signal
60f/240V/720H
$f_2$ :13.5MHz

(b)

Imaging element

960 pixels
(720×4/3)

320 lines

D1n1

D13

D12

D11

$1/24MHz$
($1/(13.5×4/3×4/3)$)
[sec]

Schematic diagram of effective region by first synchronizing signal

First synchronizing signal
60f/320V/960H
$f_1$ :24MHz

(a)

Fig. 13

To digital
signal processing
circuit (2)

210·a

Y2

C2

523

520

521

522

RAM

RAM

Read control
signal
generating
circuit

Write control
signal
generating
circuit

537

Signal selecting circuit

517

519

518

527

529

528

LPF(1)
5:4

LPF(2)
5:4

LPF(3)
5:4

LPF(4)
5:4

Signal for selecting

Y1

C1

From digital
signal processing
circuit (1)

Fig. 14

m2 lines

n2 pixels

Output image region in high picture quality mode

(Camera shake non-correction mode)

( b )

m2 lines

n2 pixels

Output image region in camera shake correction mode

( c )

n1 pixels

n3 pixels

m3 lines

m1 lines

Imaging element
(m1 lines × n1 pixels)

(First synchronizing system reference signal)

( a )